Europäisches Patentamt

(19) European Patent Office

Office européen des brevets

(11) Numéro de publication : **0 189 351 B1**

# (12) FASCICULE DE BREVET EUROPEEN

(45) Date de publication du fascicule du brevet :
27.03.91 Bulletin 91/13

(21) Numéro de dépôt : 86400123.5

(22) Date de dépôt : 22.01.86

(51) Int. Cl.⁵ : **A41D 27/06, A41D 31/02,**
**C09J 7/04, B05D 1/26,**
**B05C 9/04**

(54) **Produit nouveau destiné à être collé à chaud par pression sur des articles plats et procédé de fabrication d'un tel produit.**

(30) Priorité : 23.01.85 FR 8500922

(43) Date de publication de la demande :
30.07.86 Bulletin 86/31

(45) Mention de la délivrance du brevet :
27.03.91 Bulletin 91/13

(84) Etats contractants désignés :
AT BE CH DE FR GB IT LI LU NL SE

(56) Documents cités :
EP-A- 0 085 897
DE-A- 1 610 760
DE-A- 1 777 017
DE-A- 2 214 236
FR-A- 2 177 038
FR-A- 2 338 141

(56) Documents cités :
GB-A- 692 945
GB-A- 2 085 328
US-A- 2 147 772
US-A- 4 333 980
TEINTEX, no. 11, novembre 1972, pages
601-606; M. REVERAND: "Le thermocollage
des textiles: Les résines thermo-adhérentes"

(73) Titulaire : LAINIERE DE PICARDIE: Société
anonyme
B.P. 12 Buire-Courcelles
F-80200 Peronne (FR)

(72) Inventeur : Grohens, Pierre
Rue Cabaret - Douingt Flamicourt
F-80200 Peronne (FR)

(74) Mandataire : Derambure, Christian
BUGNION ASSOCIES 55, rue Boissonade
F-75014 Paris (FR)

EP 0 189 351 B1

## Description

L'invention concerne un produit nouveau destiné à être collé à chaud et par pression sur des articles plats rapportés par exemple sur des textiles et constituant des doublures ou triplures pour des articles vestimentaires.

On connaît déjà des produits composites constitués d'un support plat, flexible, par exemple un tissu, tricot, ou non-tissé, revêtu d'une couche continue ou non, d'un produit thermo-fusible, solide à température ordinaire et sans pouvoir adhésif, mais plastique à température élevée, donc partiellement pâteux, partiellement coulant, mais toujours collant.

L'élément composite est soudé ensuite sur l'article vestimentaire plat par application de chaleur et pression. Cependant, la couche thermo-fusible qui doit assurer une adhérence entre l'élément composite et l'article plat (et la draperie par exemple) fond et pénètre aussi bien dans le support que dans l'article plat rapporté. La pénétration par la matière thermo-fusible dans le support est appelée traversée, tandis que la pénétration dans l'élément rapporté est appelée retour. Ainsi, la matière thermo-fusible peut venir souiller du fait du retour et/ou de la traversée la surface de l'outil assurant l'apport de chaleur et appliquant la pression sur l'élément composite et l'article plat.

Or, les éléments composites connus et utilisés couramment ont des épaisseurs et des types de fibres différents, une densité de tissage et un grattage différents. Par conséquent, selon la nature du support, la diffusion du produit thermo-fusille est plus ou moins importante à travers celui-ci.

Ainsi, on a essayé de mettre au point des produits composites destinés à être collés à chaud et par pression constitués d'un support plat et revêtu d'un enduit réticulaire d'adhésif qui se compose d'au moins deux couches réticulaires superposées, la couche supérieure se trouvant directement sur la couche inférieure, la couche inférieure possédant un fluage thermo-plastique plus faible que la couche supérieure se trouvant directement sur elle (Voir FR-A-2.177.038).

Pour fabriquer un tel produit, on effectue l'application d'un réseau de colle fusible à chaud sur l'élément support à l'aide d'un corps de gravure qui présente sur sa surface des cavités disposées sous forme de réseau correspondant au réseau de colle, les cavités étant telles que la colle y est introduite par raclage, l'élément de support étant posé sur la surface du cylindre de gravure avec éventuellement application de chaleur. Le procédé consiste à disposer dans les cavités du corps de gravure tout d'abord une première colle pulvérulente et aussitôt après sur celle-ci, on dépose sur les cavités une autre colle pulvérulente de propriétés identiques ou différentes, puis on transfère les deux couches de poudre superposées sur l'élément support appliqué sur le corps de gravure.

Ainsi, selon ce procédé, on utilise un corps de gravure qui est en fait un cylindre semblable à ceux utilisés pour l'héliographie. Les cavités d'un tel cylindre sont remplies d'une première colle pulvérulente et juste au-dessus d'une seconde colle pulvérulente qui sont ensuite transférées sur l'élément support. Les colles pulvérulentes sont telles qu'elles ont un point de fusion ou un fluage thermo-plastique différent.

Cependant, un tel procédé comporte des inconvénients qui sont les suivants :

Les quantités de poudre déposées dans les cavités du cylindre sont peu précises. Ainsi, les couches obtenues ne sont pas uniformes.

La couche supérieure de colle doit adhérer sur la couche inférieure.

C'est pourquoi, selon ce procédé, on effectue le plus souvent un frittage qui permet à la couche supérieure d'adhérer sur la couche inférieure.

Par ailleurs, un tel procédé ne permet pas de déposer une couche inférieure qui est un anti-adhérent et les constitutions chimiques et/ou physiques de la sous-couche et de la couche supérieure doivent être compatibles selon ce procédé.

On connaît, par ailleurs, (GB-A-692.945) une bande adhésive recouverte sur l'une de ses faces d'une couche thermoadhésive et sur l'autre une couche de cire dans laquelle la température de fusion de la cire est inférieure à la température de ramollissement de la couche thermoadhésive. Cette bande est destinée à être fixée par application de chaleur et de pression à l'aide d'un fer à repasser ménager. La couche de cire évite l'emplacement de ce fer par la couche d'adhésive.

On connaît également (DE-A-1.610.760, US-A-4,333,980) des tissus de renfort destinés à être coller entre deux éléments de vêtement et revêtus, à cet effet, sur chacune de leur place d'une couche thermoadhésive.

On connaît encore (DE-A-1.777.017, GB-A-2.085.328) des procédés et des appareils de dépôts de couches de part et d'autre et d'un même support.

Enfin, on connaît également une bande thermoadhésive (US-A-2,147,772) qui est recouverte sur l'une de ses faces d'une substance thermoadhésive et sur l'autre d'une deuxième couche d'enduction destinée à améliorer le collage de cette bande. Il a été plus particulièrement développé pour assurer la fixation de capsule par exemple de bouteille de lait sur la bouteille elle-même.

L'invention vise à pallier ces inconvénients.

Un but de l'invention est donc de fournir un produit constitué d'un élément support et revêtu d'une couche adhésive, cette couche adhésive ne pouvant pas diffuser par traversée à travers l'élément support au moment du contre-collage avec l'article plat (draperie) ou au moment du passage en cours de fabrication.

A cet effet, l'invention concerne un produit destiné a être collé à chaud et par pression sur des articles plats, par exemple articles vestimentaires, le produit étant constitué d'un élément support plat, flexible, comportant une première couche thermo-fusible appliquée au recto de l'élément support et d'une seconde couche moins thermo-fusible que la première appliquée au verso de l'élément support.

Selon un mode de réalisation de l'invention, au moins une couche est continue, l'autre couche étant discontinue par exemple constituée de points disposés au hasard.

Selon une forme de réalisation préférée de l'invention, les couches sont discontinues, disposées ponctuellement sur chaque face de l'élément support, les points de chacune des couches étant situés en regard les uns des autres en coupe transversale.

De préférence, la couche la moins thermo-fusible est constituée d'un anti-adhérent. Par exemple, cet anti-adhérent est un produit à base de silicone.

Enfin, le produit thermo-fusible est un polymère ou un copolymère thermoplastique, par exemple, un polyéthylène, copolyéthylène, polyamide, copolyamide, polyester, copolyester, ou une dispersion/solution de ces produits thermo-fusibles ou leurs mélanges.

L'invention concerne, en outre, un procédé de fabrication d'un tel produit nouveau.

Le procédé de fabrication de ce produit nouveau consiste à faire défiler entre deux corps d'impression, un élément flexible plat. Le procédé est tel que chaque corps d'impression dépose, sur chaque face de l'élément flexible plat, des couches continues ou non qui, en coupe transversale, sont situées en regard l'une de l'autre.

Le procédé préféré est tel que l'on règle la vitesse périphérique des corps d'impression. Plus préférentiellement, les corps d'impression sont des cylindres d'impression dont la vitesse périphérique est réglée en fonction des diamètres respectifs des cylindres d'impression, ces cylindres étant soit des cylindres comportant des cavités périphériques, soit des perforations périphériques, les cavités ou les perforations d'un corps d'impression correspondant avec les cavités ou perforations du deuxième cylindre d'impression, au moins au point de tangence de l'article plat flexible avec chacun des deux cylindres d'impression.

Enfin, les cylindres d'impression peuvent être tels qu'ils ont le même diamètre, et qu'ils comportent le même réseau réticulaire de cavités ou de perforations.

La description suivante, en regard des dessins annexés à titre d'exemple non limitatif, permettra de comprendre comment l'invention pourra être mise en pratique.

La figure 1 est une vue en coupe transversale d'un élément composite selon l'invention, en regard de l'élément rapporté.

Les figures 2a, 2b, 2c sont des vues schématiques de différents modes de réalisation d'une machine utilisée pour la mise en oeuvre du procédé selon l'invention.

Les figures 3a et 3b montrent schématiquement des cylindres d'impression utilisés selon l'invention.

Le produit 1 destiné à être collé à chaud et par pression sur des articles plats 2, par exemple sur des tissus pour articles vestimentaires, est constitué selon l'invention d'un élément support 3. Cet élément support 3 est plat et flexible. Il peut s'agir par exemple d'un élément support en papier, ou textile, un tissé, un non-tissé ou un tricoté.

Le support 3 comporte une première couche 4 thermo-fusible appliquée sur la face recto 5 de l'élément support 3 et une seconde couche 6 appliquée sur la face verso 7 de l'élément support 3. La première couche 4 est thermo-fusible, tandis que la seconde couche 6 est moins thermo-fusible que la première. Par thermo-fusible, on entend une couche qui permet le scellement à chaud, qui est solide à température ordinaire et ne possède pas de pouvoir adhésif, mais est plastique à température élevée donc partiellement pâteuse, coulante, mais adhésive. Ainsi, la première couche 4 possède aussi un fluage thermoplastique supérieur au fluage thermoplastique de la seconde couche 6.

Le produit 1 selon l'invention est tel que la seconde couche 6 constitue une barrière vis-à-vis de la première couche 4, à savoir empêche à la fois le phénomène de retour et le phénomène de traversée tels qu'ils ont été définis plus haut.

Selon un mode de réalisation de l'invention, au moins une couche est continue tandis que l'autre est discontinue, par exemple constituée de points disposés au hasard.

Mais, il est préférable que ce soit la seconde couche 6, possédant un fluage thermoplastique inférieur au fluage thermoplastique de la première couche 4, soit continue, et ce, afin de créér une barrière efficace aux phénomènes de retour et de traversée.

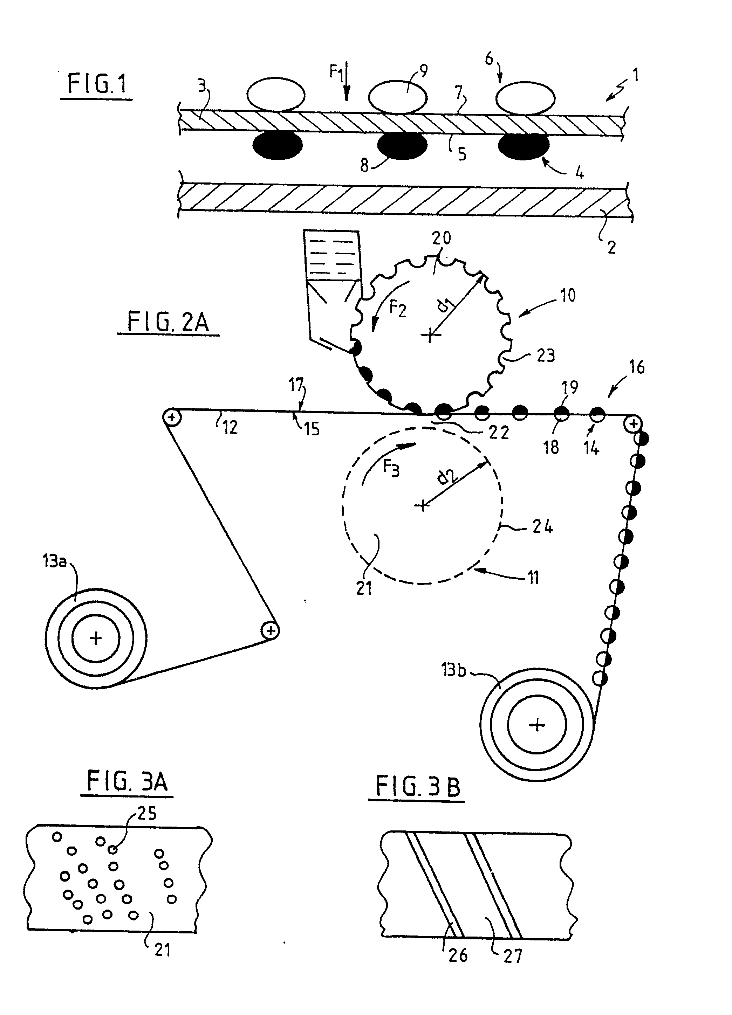

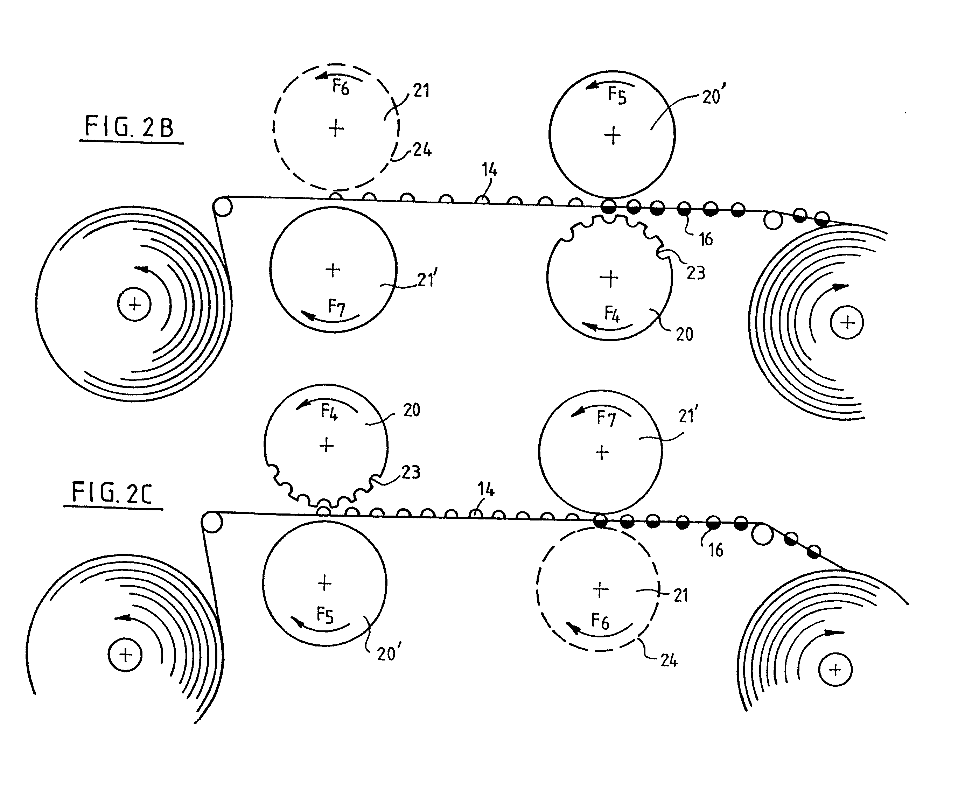

Sur la figure 1, on a représenté un mode de réalisation préféré de l'invention, à savoir des couches 4 et 6 discontinues, disposées ponctuellement sur chaque face 5 et 7 de l'élément support 3. Les points 8 formant la première couche 4 disposée sur la face recto 5 de l'élément support sont situés en regard des points 9 formant la seconde couche 6 disposée sur la face verso 7 de l'élément support 3.

Ainsi, comme on l'a représenté sur la figure 1, lorsque l'on effectue à la fois un chauffage de l'élément 1 et une pression appliquée dans le sens de la flèche F1 afin de coller l'élément 1 sur l'élément rapporté 2, les points 8 qui ont un fluage thermoplastique supérieur au fluage thermoplastique des points 9 ne peuvent traverser par retour l'élément support 3 et ne peuvent donc traverser la face verso 7 de l'élément support 3, face verso 7 sur laquelle on applique l'outil assurant l'apppport de chaleur et appliquant la pression sur l'élément composite 1. De plus, on règle le volume des joints 8 ainsi que leur fluage thermoplastique de façon que lors du collage de l'élément composite 1 sur l'élément rapporté 2, les points 8 de fluage thermoplastique supérieur ne puissent traverser complètement l'élément rapporté 2.

Selon un mode préférentiel de l'invention, la couche 4 placée sur la face recto 5 est constituée d'un polymère ou copolymère thermoplastique, par exemple, un polyéthylène, copolyéthylène, polyamide, copolyamide. Par contre, la couche 6 la moins thermofusible est constituée d'un anti-adhérent. Cet anti-adhérent peut être un produit à base de silicone.

Sur les figures 2a, 2b, 2c, on a représenté un dispositif permettant la fabrication d'un produit composite 1 selon l'invention.

Le procédé de fabrication de ce produit nouveau est tel que l'on fait défiler entre un premier corps d'impression 10 et un second corps d'impression 11, un élément flexible plat 12. Cet élément flexible plat 12 provient d'une bobine 13a déroulée du fait du déplacement en sens contraire d'une bobine 13b du produit tel que fabriqué. Chaque corps d'impression 10, 11 dépose sur claque face 15, 17 de l'élément flexible plat 12, des couches 14, 16 continues ou non qui, en coupe transversale, sont situées l'une en regard de l'autre,

Ces couches 14, 16 peuvent, par exemple, être constituées de points 18, 19 situés en regard les uns des autres en coupe transversale.

Ce procédé est tel que l'on règle la vitesse périphérique des corps d'impression 10, 11. Plus préférentiellement, ces corps d'impression sont des cylindres d'impression 20, 21 tournant en sens contraire (flèches F2, F3). Ils ont des diamètres d1 (pour le corps d'impression 20) et d2 (pour le corps d'impression 21). La vitesse périphérique des cylindres d'impression 20, 21 est réglée en fonction des diamètres respectifs d1 et d2 de ces cylindres d'impression 20, 21 de façon que ces cylindres 20, 21 déposent des points 18, 19 respectivement les uns en regard des autres.

Selon un mode de réalisation préférentiel de l'invention, les cylindres 20, 21 sont des cylindres qui comportent des cavités périphériques 23. Ainsi, les cylindres 20, 21 sont des cylindres tels que ceux utilisés en héliographie.

Les cylindres 20, 21 peuvent, selon un autre mode de réalisation de l'invention, comporter des perforations 24. Ainsi, les cylindres d'impression sont des cylindres d'impression en sérigraphie.

Selon un mode de réalisation de l'invention représenté en figure 2a, les cylindres 20, 21 sont tangents au moins en un point 22, superposés l'un au-dessus de l'autre, le plan contenant leurs axes de rotation étant perpendiculaire au plan de l'élément flexible 12.

L'élément flexible 12 est tangent à chacun des deux cylindres 20, 21 entre lesquels il défile, au point 22.

On règle les cylindres 20, 21 de façon à ce que respectivement, leurs cavités 23 et leurs perforations 24 soient situées les unes en regard des autres, au moins au point de tangence 22 de l'article plat flexible 12 avec chacun des deux cylindres d'impression 20, 21.

Selon un autre mode de réalisation de l'invention, les deux cylindres 20, 21 ne sont pas superposés l'un à l'autre, mais au contraire, disposés successivement l'un après l'autre par rapport au sens de défilement de l'élément flexible 12. Dans ce cas, on prévoit des cylindres 20', 21', supports tangents et superposés respectivement à chacun des cylindres 20, 21. Le plan contenant les axes des cylindres 20 et 21' et le plan contenant les axes des cylindres 21 et 21' sont perpenduculaires au plan de l'élément flexible 12. Ces cylindres 20', 21' support supportent l'élément flexible 12, et permettent un défilement correct de l'élément flexible 12 qui défile entre les cylindres 20, 20', puis entre les cylindres 21, 21'. En variante, les cylindres 20', 21' support peuvent être des cylindres 20', 21' d'entrainement de l'élément flexible 12 et/ou des cylindres 20, 21. Les vitesses de rotation des quatre cylindres 20, 21, 20', 21' sont ajustées rigoureusement, ainsi que les distances que les séparent, de façon à assurer un synchronisme parfait des cylindres 20 et 21. Par exemple, les quatre cylindres 20, 21, 20', 21' sont entrainés par un moteur commun et/ou sont reliés mécaniquement et/ou cinématiquement. Ainsi, les cylindres 20, 21, 20', 21' ont des vitesses périphériques telles que les couches 14, 16, bien que non appliquées simultanément sont déposées les unes en regard des autres en coupe transversale. Les cylindres 20 et 20' tournent en sens contraire (flèches F4, F5). De même, les cylindres 21 et 21' tournent en sens contraire (flèches F6, F7).

Ainsi, selon un mode de réalisation de l'invention, un cylindre (par exemple le cylindre 20) est un cylindre d'héliographie, tandis que l'autre (par exemple le cylindre 21) est un cylindre d'impression en sérigraphie.

Selon un mode de réalisation de l'invention représenté en figure 2b, le cylindre 21 d'impression en sérigraphie et son cylindre 21' support correspondant sont situés en amont du cylindre 20 d'héliographie et de son cylindre 20' support correspondant, l'amont et l'aval étant définis par rapport au sens de défilement de l'élément flexible 12.

Egalement, les cylindres 20 et 21 peuvent être situés au dessous, ou au dessus de l'élément flexible 12, selon les résultats que l'on désire obtenir pour les couches 14 et 16. Selon le mode de réalisation de la figure 2b, le cylindre 20 d'héliographie dépose la couche 16, tandis que le cylindre 21 dépose la couche 14.

Selon un mode de réalisation de l'invention représenté en figure 2c, le cylindre 20 d'héliographie et le cylindre 20′ support correspondant sont situés en amont du cylindre 21 d'impression en sérigraphie et de son cylindre 21′ support correspondant. Le cylindre 20 d'héliographie dépose la couche 14, tandis que le cylindre 21 dépose la couche 16.

Les cylindres 20, 21, 20′, 21′ ont des vitesses de rotation telles que les cavités 23 et les perforations 24 sont situées en regard les unes des autres en coupe transersale.

On a représenté sur les figures 3a et 3b des cylindres comportant des perforations, à savoir des cylindres d'impression en sérigraphie.

Sur la figure 3a, les cavités 25 sont disposées selon un réseau sur le cylindre 21, tandis que les perforations 26 sont disposées selon des lignes sur un cylindre 27.

Ainsi, les perforations d'un cylindre peuvent ne pas correspondre aux perforations ou cavités de l'autre, mais les perforations d'un cylindre ou ses cavités sont telles qu'elles permettent de disposer les points 8 ayant un fluage thermoplastique plus élevé, toujours en regard de la couche discontinue ou non 9 ayant un fluage thermoplastique inférieur.

De préférence, les cylindres d'impression ont le même diamètre, ils tournent à la même vitesse, et ils comportent le même réseau réticulaire de cavités 23 ou de perforations 24.

Selon une autre variante de l'invention, on dépose sur l'élément support 12, une double couche composée de produits chimiques qui peuvent avoir une action de réticulation sur la base de la couche d'enduction (c'est-à-dire la surface en contact avec le support textile).

## Revendications

1. Entoilage thermoadhésif comportant un élément support textile (3) et une première couche thermo-fusible appliquée sur l'une de ses faces dite face recto, comportant une seconde couche (6) moins thermo-fusible que la première, la seconde couche constituant une barrière pour la première lorsque celle-ci est plastique et caractérisé en ce que la seconde couche est appliquée sur la face verso (7) de l'élément de support (3).

2. Produit selon la revendication 1, caractérisé par le fait qu'il comporte au moins une couche (6) continue, l'autre couche (4) étant discontinue.

3. Produit selon l'une quelconque des revendications 1 et 2, caractérisé par le fait que la couche (4) la plus thermo-fusible est discontinue, tandis que la couche (6) la moins thermo-fusible est continue.

4. Produit selon la revendication 1, caractérisé par le fait que les couches (4) et (6) sont discontinues, disposées ponctuellement sur chaque face (5, 7) de l'élément support (3), les points (8, 9) des couches (4, 6) étant situés en regard les uns des autres en coupe transversale.

5. Produit selon l'une des revendications 1 à 4, caractérisé par le fait que la couche la moins thermofusible (6) est constituée d'un anti-adhérent.

6. Produit selon la revendication 1, caractérisé par le fait que l'anti-adhérent est un produit à base de silicone.

7. Produit selon l'une des revendications 1 à 6, caractérisé par le fait que le produit thermo-fusible est un polymère, copolymère thermoplastique, par exemple, un polyéthylène, copolyéthylène, polyamide, polyester, copolyester ou une dispersion/solution de ces produits thermo-fusibles ou leurs mélanges.

8. Procédé de fabrication du produit de la première revendication dans lequel l'on fait défiler contre au moins deux corps d'impression (10, 11) un élément flexible, plat (12) chaque corps d'impression (10, 11) déposant sur chaque face (15, 17) de l'élément support (12) des couches (14, 16) thermo-fusibles continues ou non qui, en coupe transversale, sont situées en regard l'une de l'autre, la deuxième couche étant moins thermofusible que la première, les éléments constitutifs de la première couche étant toujours opposés à des éléments constitutifs de la deuxième.

9. Procédé selon la revendication 8 caractérisé par le fait que l'on règle la vitesse périphérique des corps d'impression (10, 11) pour la vitesse périphérique des corps d'impression (10, 11) pour qu'ils déposent des couches (14, 16) situées en regard l'une de l'autre en coupe transversale.

10. Procédé selon l'une quelconque des revendications 8 et 9, caractérisé par le fait que les corps d'impression (10, 11) sont des cylindres d'impression.

11. Procédé selon l'une quelconque des revendications 8 à 10, caractérisé par le fait que les cylindres sont des cylindres comportant des cavités périphériques (23).

12. Procédé selon l'une quelconque des revendications 8 à 11, caractérisé par le fait que les cylindres sont des cylindres comportant des perfortions périphériques (23).

13. Procédé selon l'une quelconque des revendications 8 à 10, caractérisé par le fait que l'un des cylindres (20) possède des cavités périphériques (23) tandis que l'autre cylindre (21) comporte des perforations périphériques (24).

14. Procédé selon l'une quelconque des revendications 8 à 13, caractérisé en ce que les cylindres (20, 21) sont tangents en un point (22), l'élément flexible (12), défilant entre ces deux cylindres (20, 21) étant également tangent à chacun des cylindres (20, 21) au point (22).

15. Procédé selon l'une quelconque des revendications 8 à 13, caractérisé par le fait que les cavités (23) ou perforations (24) d'un corps d'impression (10) correspondent avec les cavités (23) ou perforations (24) du deuxième cylindre d'impression (21) au moins au point de tangence (22) de l'article plat, flexible (12) avec chacun des deux cylindres d'impression (20, 21).

16. Procédé selon l'une quelconque des revendications 8 à 14; caractérisé par le fait que les cylindres d'impression (20, 21) ont le même diamètre et ils comportent le même réseau réticulaire de cavités (23) ou de perforations (24).

17. Procédé selon l'une quelconque des revendications 8 à 16, caractérisé par le fait que les cylindres d'impression (20, 21) sont disposés successivement l'un après l'autre par rapport au sens de défilement de l'élément flexible (12).

18. Procédé selon l'une quelconque des revendications 8 à 17, caractérisé par le fait que des cylindres (20' 21') support sont tangents et superposés respectivement à chacun des cylindres (20, 21), les quatre cylindres (20, 21, 20', 21') ayant des vitesses périphériques telles que les couches (14, 16) sont déposées l'une en regard de l'autre en coupe transversale.

## Ansprüche

1. Thermo-anhaftende Bespannung mit einem textilen Supportelement (3) und einer ersten, an einer Vorderseite genannten Seite angebrachten, thermo-schmelzbaren Schicht und mit einer zweiten Schicht (6), welche weniger leicht thermo-schmelzbar ist als die erste Schicht, wobei die zweite Schicht eine Barriere für die erste Schicht darstellt, wenn diese plastisch ist, dadurch gekennzeichnet, daß die zweite Schicht an der Rückseite (7) des Supportelementes (3) angebracht ist.

2. Produkt nach Anspruch 1, dadurch gekennzeichnet, daß es wenigstens eine kontinuierliche Schicht (6) aufweist, wobei die andere Schicht (4) diskontinuierlich ist.

3. Produkt nach einem der Ansprüche 1 oder 2, dadurch gekennzeichnet, daß die am meisten thermo-schmelzbare Schicht (4) diskontinuierlich ausgebildet ist, während die am wenigsten thermo-schmelzbare Schicht (6) kontinuierlich ausgebildet ist.

4. Produkt nach Anspruch 1, dadurch gekennzeichnet, daß die Schichten (4, 6) diskontinuierlich ausgebildet sind und punktweise an jeder der Seiten (5, 7) des Supportelementes (3) angeordnet sind, wobei die Punkte (8, 9) der Schichten (4, 6) in einem transversalen Schnitt einander gegenüberliegend positioniert sind.

5. Produkt nach einem der Ansprüche 1 bis 4, dadurch gekennzeichnet, daß die am wenigsten thermo-schmelzbare Schicht (6) von einem Antiadhäsivmittel gebildet wird.

6. Produkt nach Anspruch 1, dadurch gekennzeichnet, daß das Antiadhäsivmittel ein Produkt auf Silikonbasis ist.

7. Produkt nach einem der Ansprüche 1 bis 6, dadurch gekennzeichnet, daß das thermo-schmelzbare Produkt ein Polymer, ein thermoplastisches Copolymer, beispielsweise ein Polyethylen, Copolyethylen, Polyamid, Polyester, Copolyester oder eine Dispersion/Lösung dieser thermo-schmelzbaren Produkte oder ihrer Mischungen ist.

8. Verfahren zur Herstellung des Produktes nach Anspruch 1, wobei wenigstens zwei Druckkörpern (10, 11) ein flaches flexibles Element (12) zugeführt wird, wobei jeder Druckkörper (10, 11) auf jeder Seite (15, 17) des Supportelementes (12) kontinuierliche oder diskontinuierliche thermo-schmelzbare Schichten (14, 16) aufbringt, welche in einem Transversalschnitt einander gegenüberliegend angeordnet sind, wobei die zweite Schicht weniger thermo-schmelzbar als die erste ist und wobei die die erste Schicht ausbildenden Elemente immer gegenüberliegend den die zweite Schicht ausbildenden Elementen angeordnet sind.

9. Verfahren nach Anspruch 8, dadurch gekennzeichnet, daß die Umfangsgeschwindigkeit der Druckkörper (10, 11) für die Umfangsgeschwindigkeit der Druckkörper (10, 11) geregelt wird, so daß die Schichten (14, 16) in einem Transversalschnitt einander gegenüberliegend angeordnet werden.

10. Verfahren nach einem der Ansprüche 8 oder 9, dadurch gekennzeichnet, daß die Druckkörper (10, 11) von Druckzylindern gebildet werden.

11. Verfahren nach einem der Ansprüche 8 bis 10, dadurch gekennzeichnet, daß die Zylinder als Zylinder mit am Umfang angeordneten Ausnehmungen (23) ausgebildet sind.

12. Verfahren nach einem der Ansprüche 8 bis 11, dadurch gekennzeichnet, daß die Zylinder als Zylinder mit am Umfang angeordneten Perforierungen (24) ausgebildet sind.

13. Verfahren nach einem der Ansprüche 8 bis 12, dadurch gekennzeichnet, daß einer der Zylinder (20) am Umfang angeordnete Ausnehmungen (23) aufweist und daß der andere Zylinder (21) am Umfang angeordnete Perforationen (24) aufweist.

14. Verfahren nach einem der Ansprüche 8 bis 13, dadurch gekennzeichnet, daß die Zylinder (20, 21) sich in einem Punkt (22) berühren, wobei das zwischen den zwei Zylindern (20, 21) durchgeführte flexible Element (12) gleichfalls jeden der Zylinder (20, 21) in diesem Punkt (22) berührt.

15. Verfahren nach einem der Ansprüche 8 bis 13, dadurch gekennzeichnet, daß die Ausnehmungen (23) oder Perforationen (24) eines Druckkörpers (10) den Ausnehmungen (23) oder Perforationen (24) des zweiten Druckzylinders (21) zumindest im Berührungspunkt (22) des flachen, flexiblen Artikels (12) mit jedem der zwei Druckzylinder (20, 21) entsprechen.

16. Verfahren nach einem der Ansprüche 8 bis 14, dadurch gekennzeichnet, daß die Druckzylinder (20, 21) gleichen Durchmesser aufweisen und daß sie dasselbe Gitternetz von Ausnehmungen (23) oder Perforationen (24) aufweisen.

17. Verfahren nach einem der Ansprüche 8 bis 16, dadurch gekennzeichnet, daß die Druckzylinder (20, 21) hintereinander einer nach dem anderen relativ zur Zuführungsrichtung des flexiblen Elementes (12) angeordnet sind.

18. Verfahren nach einem der Ansprüche 8 bis 17, dadurch gekennzeichnet, daß Supportzylinder (20', 21') jeden der Zylinder (20, 21) berühren und entsprechend übereinander liegen, wobei die vier Zylinder (20, 21, 20', 21') derartige Umfangsgeschwindigkeiten aufweisen, daß die Schichten (14, 16) in einem Transversalschnitt einander gegenüberliegend angeordnet werden.

## Claims

1. Thermo-adhesive interlining comprising a textile support element (3) and a first thermo-fusible layer applied on one of its faces, the so-called front face, comprising a second layer (6) less thermo-fusible than the first, the second layer constituting a barrier for the first when the former is plastic and characterised in that the second layer is applied on the reverse face (7) of the support element (3).

2. Product according to claim 1, characterised by the fact that it comprises at least one continuous layer (6), the other layer (4) being discontinuous.

3. Product according to any one of claims 1 and 2, characterised by the fact that the more thermo-fusible layer (4) is discontinuous, while the less thermo-fusible layer (6) is continuous.

4. Product according to claim 1, characterised by the fact that the layers (4) and (6) are discontinuous, arranged selectively on each face (5, 7) of the support element (3), the points (8, 9) of the layers (4, 6) being situated opposite one another in transverse section.

5. Product according to one of claims 1 to 4, characterised by the fact that the less thermo-fusible layer (6) is composed of an anti-adherent.

6. Product according to claim 1, characterised by the fact that the anti-adherent is a silicone-based product.

7. Product according to one of claims 1 to 6, characterised by the fact that the thermo-fusible product is a polymer, thermoplastic copolymer, for example, a polyethylene, copolyethylene, polyamide, polyester, copolyester or a dispersion/solution of these thermo-fusible products or their mixtures.

8. Method of manufacturing the product of the first claim in which a flat, flexible element (12) is made to pass against at least two printing bodies (10, 11), each printing body (10, 11) depositing on each face (15, 17) of the support element (12) continuous or non-continuous thermofusible layers which, in transverse section, are situated opposite one another, the second layer being less thermofusible than the first, the constituent elements of the first layer always being opposed to the constituent elements of the second.

9. Method according to claim 8, characterised by the fact that the peripheral speed of the printing bodies (10, 11) for the peripheral speed of the printing bodies (10, 11) is regulated so that they deposit layers (14, 16) situated opposite one another in transverse section.

10. Method according to any one of claims 8 and 9, characterised by the fact that the printing bodies (10, 11) are printing cylinders.

11. Method according to any one of claims 8 to 10, characterised by the fact that the cylinders are cylinders comprising peripheral cavities (23).

12. Method according to any one of claims 8 to 11, characterised by the fact that the cylinders are cylinders comprising peripheral perforations (24).

13. Method according to any one of claims 8 to 12, characterised by the fact that one of the cylinders (20) has peripheral cavities (23) while the other cylinder (21) comprises peripheral perforations (24).

14. Method according to any one of claims 8 to 13, characterised in that the cylinders (20, 21) are tangential at one point (22), the flexible element (12) passing between these two cylinders (20, 21) being likewise tangential to each of the cylinders (20, 21) at the point (22).

15. Method according to any one of claims 8 to 13, characterised by the fact that the cavities (23) or perforations (24) of one printing body (10) correspond with the cavities (23) or perforations (24) of the second printing cylinder (21) at least at the point of tangency (22) of the flat, flexible article (12) with each of the two printing cylinders (20, 21).

16. Method according to any one of claims 8 to 14, characterised by the fact that the printing cylinders (20, 21) are of equal diameter and comprise the same reticular network of cavities (23) or perforations (24).

17. Method according to any of claims 8 to 16, characterised by the fact that the printing cylinders (20, 21) are arranged successively one after the other in relation to the direction of passage of the flexible element (12).

18. Method according to any one of claims 8 to 17, characterised by the fact that the support cylinders (20', 21') are respectively tangential to and superposed on each of the cylinders (20, 21), the four cylinders (20, 21, 20', 21') having peripheral speeds such that the layers (14, 16) are arranged opposite one another in transverse section.

FIG.1

FIG. 2A

FIG. 3A

FIG. 3 B

FIG. 2B

FIG. 2C